# EUROPÄISCHE PATENTANMELDUNG

(11) **EP 2 033 755 A1**
(43) Veröffentlichungstag der Anmeldung: **11.03.2009**
(21) Anmeldenummer: 07017372.9
(22) Anmeldetag: 05.09.2007
(51) Int. Cl.: B29C 31/04, B29C 39/24, B29C 39/42

(54) **Vorrichtung zum Herstellen von Formkörpern aus Kunststoff**

(71) Anmelder: MCP-HEK Tooling GmbH, 23560 Lübeck (DE)
(72) Erfinder: Brockmüller, Wolfgang, 23858 Reinfeld (DE); Schöneborn, Henner, 23858 Reinfeld (DE)
(74) Vertreter: Vollmann, Heiko

(57) **Zusammenfassung**

Die Vorrichtung ist zum Herstellen von Formkörpern aus Kunststoff, insbesondere von aus Polyamid mit Füllkörpern dngereichertem Kunststoff bestimmt. Sie weist ein Mischmodul (10) von wenigstens zwei Komponenten mit einer ersten Kammer (2) und mindestens einer mit der ersten Kommer (2) gekoppelten zweiten Kammer (3) auf. Die zweite Kammer ist zur Aufnahme einer Gussform (60) vorgesehen. Die erste Kammer (2) und die zweite Kammer (3).können evakuiert werden. Das Mischmodul (10) ist über der ersten Kammer (2) angeordnet und dieser im Herstellungsprozess vorgeschaltet.

## Beschreibung

Die Erfindung betrifft eine Vorrichtung zur Herstellung von Formkörpern aus Kunststoff nach dem Oberbegriff des Anspruch 1.

Eine solche Vorrichtung ist aus DE 603 01 278 T2 bekannt. Diese Vorrichtung zur Herstellung von Formkörpern aus Kunststoff, weist vier Kammern auf, wobei jeweils zwei Kammern nebeneinander und zwei Kammern übereinander vorgesehen sind. In der von vorne gesehen unteren rechten Kammer ist eine Vakuumpumpe angeordnet, die es ermöglicht, dass in der linken oberen und unteren Kammer ein Vakuum aufgebaut werden kann. Die Vakuumpumpe ist derart ausgebildet und angeordnet, dass in den beiden Kammern auch unterschiedliche Drücke aufgebaut werden können. Die linke untere Kammer ist zur Aufnahme einer Gussform zum Gießen der Formkörper vorgesehen. In der linken oberen Kammer ist ein Mischmodul zum Mischen von zwei Kunststoffkomponenten angeordnet. Hierzu weist das Mischmodul zwei Sammelbehälter auf, in die die erforderliche Menge der ausgewählten Kunststoffkomponenten eingefüllt werden. Diese Komponenten können Füllstoffe umfassen, die dem Material des fertigen Gussteils die gewünschten Eigenschaften wie zum Beispiel Härte, Elastlzität, Rückstellvermögen, Formbarkeit, Druckfestigkeit und ähnliches geben. Das in dem Mischmodul gemischte Kunststoffgemisch aus mindestens zwei Kunststoffkomponenten wird über Ausgabemittel von dem Mischmodul in der oberen linken Kammer zu der Gussform in der unteren linken Kammer geleitet.

Nachteilig bei dieser bekannten Vorrichtung ist, dass diese zum Gießen von mit Füllstoff angereichertem flüssigen Kunststoff praktisch nicht geeignet ist, da die Füllstoffe im Mischmodul nicht gleichmäßig verteilt werden, da das Mischmodul lediglich zum Mischen von flüssigen weniger jedoch von festen Stoffen geeignet ist, Zudem, besteht bei der Verwendung von bereits mit Füllstoffen vermengten Kunststoffen der Nachteil, dass die Entgasung der Kunststoffkomponenten und das Entfernen der Restfeuchte aufgrund der Vermengung mit den Füllstoffen schwierig und langwierig ist.

Ausgehend von dem vorgenannten Stand der Technik liegt der vorliegenden Erfindung die Aufgabe zugrunde, eine gattungsgemäße Vorrichtung so auszubilden, dass auch mit Füllstoffen angereicherte Komponenten einfach und zuverlässig zu einem Formkörper verarbeitet werden können.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Die erfindungsgemäße Vorrichtung zum Herstellen von Formkörpern aus Kunststoff, insbesondere aus Polyamid, weist ein Mischmodul zum Mischen und Dosieren von wenigstens zwei Kunststoffkomponenten sowie darüber hinaus eine erste Kammer und mindestens eine mit der ersten Kammer gekoppelte zweite Kammer auf, wobei die zweite Kammer zur Aufnahme einer Gussform vorgesehen ist. Es sind weiterhin Mittel zum Evakuieren der ersten und/oder der zweiten. Kammer vorgesehen, um zumindest einen Unterdruck gegenüber der Umgebung in einer oder beiden Kammern zu erzeugen. Das Mischmodul zum Mischen und Dosieren der Kunststoffkomponenten ist gemäß der Erfindung der ersten Kammer vorschaltbar.

Die Vorrichtung ist also so ausgebildet, dass das Mischen und Dosieren der wenigstens zwei Kunststoffkomponenten im Mischmodul außerhalb der Kammern erfolgt und auf diese Weise die erste Kammer zur weiteren Behandlung der bereits gemischten Komponente verwendet werden kann. In der ersten Kammer kann ein Temperieren und Entgasen der Kunststoffkomponenten erfolgen, insbesondere auch das Zumischen von Füllstoffen wie Fasern, welche beispielsweise die Zugfestigkeit des späteren Formkörpers erhöhen. Durch das Vorschalten des Mischmoduls, das ohne Weiteres auch bei bekannten Maschinen gesondert gehandhabt werden kann, können auch vorhandene gattungsgemäße Vorrichtungen auf einfache Weise umgerüstet werden, um Formkörper aus solchen Kunststoffen in einfacher Weise herstellen zu können, welche aus mindestens zwei Kunststoffkomponenten und einem Füllstoff bestehen. Typischerweise kann diese Vorrichtung zur Herstellung von mit Füllstoffe angereicherten Polyamiden Verwendung finden, wodurch die Materialeigenschaften der so hergestellten Formkörper gegenüber beispielsweise Formkörpern aus Polyamid ohne Füllstoffe in ganz erheblichem Maße verbessert werden können,

Grundsätzlich muss das Mischmodul der ersten Kammer lediglich vorgeschaltet sein, d.h. es kann beim Vorhandensein geeigneter. Fordermittel auch von der Seite in die erste Kammer gefördert werden. Besonders vorteilhaft ist es jedoch, wenn das Mischmodul oberhalb der ersten Kammer vorzugsweise über dieser angeordnet ist und der Ausgang des Mischmoduls mit der ersten Kammer verbunden ist. Diese Anordnung ist deshalb besonders vorteilhaft, weil der Materialfluss vom Mischmodul zur ersten Kammer schwerkraftunterstützt ist. Darüber hinaus ist auch bei bekannten Vorrichtungen dieser Art der Raum über der ersten Kammer üblicherweise frei, sodass auch vorhandene Vorrichtungen nach dem Stand der Technik ohne weiteres durch entsprechende Nachrüstung der ersten Kammer und Anordnung des Mischmoduls oberhalb, insbesondere auf der ersten Kammer in einfacher Weise nachgerüstet werden können.

Entsprechend ist es von Vorteil, wenn die erste Kammer oberhalb der zweiten Kammer, insbesondere über dieser angeordnet ist, wie dies bei Vorrichtungen nach dem Stand der Technik an sich schon bekannt ist. Diese Anordnung unterstützt den Materialfluss von der ersten zur zweiten Kammer durch Schwerkraftwirkung.

Gemäß einer Weiterbildung der Erfindung ist mindestens eine Vakuumpumpe vorgesehen, die mit der ersten und/oder zweiten. Kammer leitungsverbindbar ist. Mittels dieser Vakuumpumpe können die Kammern evakuiert werden um beispielsweise in der ersten Kammer eine Entgasung der Kunststoffkomponenten zu erreichen. Darüber hinaus kann beispielsweise durch Evakuierung der zweiten Kammer und Belüftung der ersten Kammer der Materialfluss in die Gussform druckunterstützt werden.

Vorteilhaft ist gemäß einer Weiterbildung der Erfindung die Vorrichtung so ausgebildet, dass das Mischmodul wahlweise über oder in der ersten Kammer angeordnet werden kann. Es kann dann bei Anordnung des Mischmoduls in der ersten Kammer zum Herstellen von Formkörpern aus Polyamid ohne Füllkörper, wie es nach dem Stand der Technik bekannt ist, eingesetzt werden, wobei lediglich zum Erzeugen von Formkörpern mit armierenden Füllstoffen, also mit Kunststoff, dessen Kunststoffkomponenten vor Erhärten mit Füllkörper durchsetzt worden sind, das Mischmodul über der ersten Kammer angeordnet wird.

Für letzteren Anwendungszweck ist vorteilhaft in einer Weiterbildung eine Mischeinrichtung in der ersten Kammer vorgesehen, mit wacher die im Mischmodul gemischten flüssigen Komponenten mit den typischerweise festen Füllstoffen vermischt werden, wobei die Mischeinrichtung so ausgebildet ist, dass die Füllstoffe so in der Schwebe gehalten werden, dass eine möglichst gleichmäßige Vorteilung bis nach dem Einfüllen in die Gussform vorliegt.

Vorteilhaft weist die Mischeinrichtung mindestens ein Behältnis zur Aufnahme des Füllstoffs auf und zur Aufnahme der aus dem Mischmodul austretenden bereits gemischten Zwischenkomponente. Bei einer solchen Anordnung werden die Füllstoffe zunächst in das Behältnis in der gewünschten Menge eingebracht, wonach die Kammer mit der daran befindlichen Mischeinrichtung evakuiert und ggf. temperiert wird. Es werden dann die aus dem Mischmodul austretende Zwischenkomponente in der gewünschter Menge dem Behältnls zugeführt und dort bis zum späteren Abguss in die Gussform der zweiten Kammer intensiv durchmischt.

Eine einfache, aber praktikable Ausgestaltung wird dadurch erzielt, dass innerhalb der ersten Kammer Mittel zum Handhaben des Behältnisses, insbesondere zum Ausgießen vorgesehen sind sodass nach Vermischen der darin befindlichen Stoffe der Inhalt in einfacher Weise ausgegossen werden kann. Es kann dann auf verschmutzungsanfällige Ventile der Mischeinrichtung verzichtet werden, die Haradhabungsmittel kommen mit den Komponenten nicht in Berührung.

Die erste Kammer kann dabei nicht nur zum Entgasen der bereits vermischten aus dem Mischmodul austretenden Komponenten dienen, sondern gemäß einer Weiterbildung der Erfindung auch zum Temperieren. Dabei wird gemäß der Erfindung zweckmäßigerweise die gesamte erste Kammer oder zumindest ein Behältnis temperiert. Unter Temperieren im Sinne der Erfindung ist das Einsteigen einer vorbestimmten Temperatur oder eines vorbestimmten Temperaturverlaufs zu verstehen. Es kann sich dabei um eine Temperaturerhöhung durch Heizen oder auch um eine Temperaturabsenkung durch Kühlen oder beides nacheinander handeln.

Grundsätzlich ist die Art des Mischens der in der Mischeinrichtung zu vermischenden Komponenten und Füllstoffe beliebig. Besonders vorteilhaft wird jedoch hierzu ein Rührwerk, insbesondere ein mechanisches Rührwerk eingesetzt, das Teil der Mischeinrichtung bildet. Ein solches mechanisches Rührwerk besteht vorteilhaft aus einem Antrieb und einem Rührer, der zweckmäßigerweise so angeordnet ist, dass er in das Behältnis einführbar und vor dem Abgießen aus diesem entnehmbar ist. Auch insoweit sind Handhabungsmittel vorgesehen, welche die diesbezügliche Handhabung der Mischeinrichtung innerhalb der z.B. evakuierten ersten Kammer von außen ermöglichen.

In vorteilhafter Weise sind auch Mittel zum Temperieren der zweiten Kammer, insbesondere der darin befindlichen Gussform vorgesehen. Um in der ersten und der zweiten Kammer unterschiedliche Vakua erzeugen zu können, ist zweckmäßigerweise zwischen diesen Kammern eine absperrbare Durchgangsöffnung vorgesehen, deren Öffnungsmechanismus von außen betätigbar ist. In analoger Weise ist vorteilhaft zwischen dem Mischmodul und der ersten Kammer eine absperrbare Durchgangsöffnung vorgesehen. Diese Durchgangsöffnung wird auch dann verschlossen, wenn das Mischmodul innerhalb der ersten Kammer angeordnet ist und die Durchgangsöffnung außer Funktion ist.

Vorteilhaft ist die absperrbare Durchgangsöffnung zwischen Mischmodul und der ersten Kammer in der Decke der ersten Kammer vorgesehen, sodass bei geöffneter Durchgangsöffnung das Mischmodul so auf der ersten Kammer angeordnet wird, dass die Austrittsöffnung des Mischmoduls dichtend in die Durchgangsöffnung in der Decke der ersten Kammer eingreift oder zumindest dichtend an diese anschließt.

Um den Mischvorgang der im Mischmodul gemischten Komponenten zu forcieren, ist zweckmäßigerweise zwischen Mischmodul und erster Kammer ein statischer Mischer angeordnet, sodass die aus dem Mischmodul austretenden Komponenten auf ihrem Weg in die erste Kammer eine weitere intensive Durchmischung im statischen Mischer erfahren. Alternativ kann statt des statischen Mischers ein Fallrohr vorgesehen sein, dies ist insbesondere dann von Vorteil, wenn größere Mengen zur Verarbeitung anstehen, und nur eine der Komponenten aus dem Mischmodul in die erste Kammer zugeführt wird und die weitere Komponente schon in der ersten Kammer befindlich ist. In gleicher Weise kann zwischen der ersten Kammer und der zweiten Kammer ein Fallrohr oder Trichter als Leitungsverbindung vorgesehen sein, der zweckmäßigerweise so ausgebildet und angeordnet ist, dass sein Ausgang in der Gussform mündet.

Gemäß einer Weiterbildung der Erfindung kann innerhalb der ersten Kammer ein Vorratsbehälter für Füllstoff vorgesehen sein sowie eine Austragseinrichtung, mit welcher die gewünschte Menge Füllstoff der Mischeinrichtung zugeführt wird.

Mit der erfindungsgemäßen Vorrichtung können in vorteilhafter weise mit Füllstoffen angereicherte Mehrkomponentenkuhststoffe gemischt, temperiert, entgast und vergossen werden, insbesondere mit Füllstoffen angereichertes Polyamid, es können jedoch auch alle in solchen Maschinen üblichen in Vakuumgussverfahren wie beispielsweise für Polyurethan, Silikon, Wachs oder Polyamid mit und ohne Füllstoffe durchgeführt werden.

Ein Ausführungsbeispiel der erfindungsgemäßen Vorrichtung ist anhand der Zeichnung näher erläutert. Die einzige Figur zeigt in schematischer Darstellung die erfindungsgemäße Vorrichtung zur Herstellung von mit Füllstoffen angereichten Formkörpern aus Kunststoff.

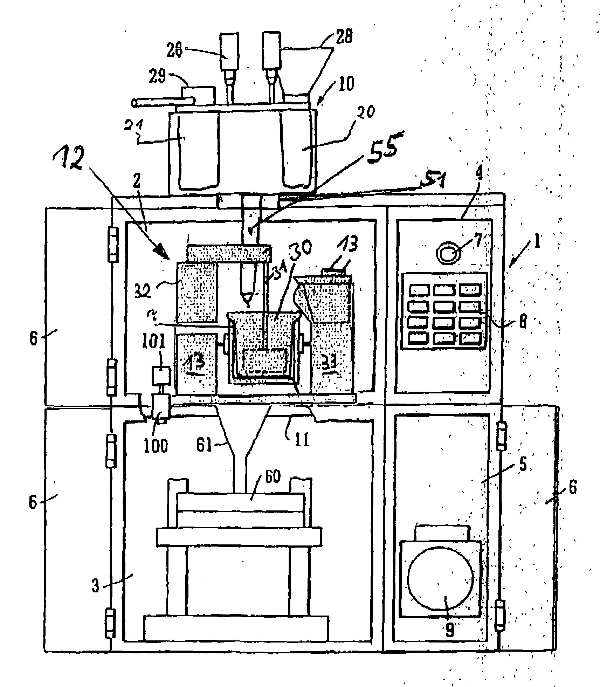

In Fig. 1 ist ein bevorzugtes Ausführungsbeispiel einer Vorrichtung 1 zur Herstellung von Formkörpern aus Kunststoff, insbesondere Polyamid gezeigt, die eine erste Kammer 2, eine zweite Kammer 3 sowie eine dritte Kammer 4 und eine vierte Kammer 5 umfasst. Die erste Kammer 2 und die zweite Kammer 3 sind quaderförmig und weise im Wesentlichen die gleiche Größe auf, wobei diese beiden Kammern übereinander angeordnet sind, Die dritte Kammer 4 und die vierte Kammer 5 sind ebenfalls quaderförmig ausgebildet und sind deutlich kleiner. Die dritte Kammer 4 ist rechts von der ersten Kammer 2 und die vierte Kammer 5 ist rechts von der zweiten Kammer 3 angeordnet, sodass die dritte Kammer 4 über der vierten Kammer 5 vorgesehen ist.

Jeder der ersten, zweiten und der vierten Kammer 2,3,5 ist jeweils eine Tür 6 zugeordnet, die schwenkbar an der jeweiligen Kammer angeordnet ist, um diese dicht zu schließen bzw. zu öffnen.

In der dritten Kammer 4 ist neben einem Not-Ausschalter 7 eine Steuereinheit angeordnet, die mittels eines Tastschirm-Bedienfelds 8 bedient wird.

Die vierte Kammer 5 enthält eine Vakuumpumpe 9, wobei die Vakuumpumpe 9 sowohl mit der ersten Kammer 2 als auch mit der zweiten Kammer 3 über nicht dargestellte Leitungen und Ventile verbunden ist, sodass in der ersten und der zweiten Kammer ein Vakuum mittels der Vakuumpumpe 9 aufgebaut werden kann. Die Vakuumpumpe 9 ist dabei derart ausgestattet, dass in den beiden Kammern 2 und 3 auch unterschiedliche Unterdrücke erzeugt werdet können. Die Vakuumpumpe 9 wird durch die Steuereinheit gesteuert.
Die erste Kammer 2 und die zweite Kammer 3 sind durch eine Platte 11 getrennt, in der ein Ventil 100 mit einem Motorantrieb 101 vorgesehen ist. Das Ventil 100 ermöglicht einen Druckausgleich zwischen der ersten und der zweiten Kammer, wenn dies erforderlich ist.

Die zweite Kammer 3 ist zur Aufnahme einer Gussform 60 vorgesehen, in der ein Kunststoffgemisch zu einem Formkörper geformt und ausgehärtet wird. Die Gussform 60 ist über eine Zuleitung in Form eines Trichters 61 mit der ersten Kammer 2 und diese wiederum mit einem Mischmodul 10 verbunden, Das Mischmodul 10 ist der ersten Kammer 2 vorgeordnet, wobei das Mischmodul 10 außerhalb der vier Kammern 2, 3, 4, 5 angeordnet ist, Zwischen dem Auslass des Mischmoduls 10 und der ersten Kammer 2 ist eine absperrbare Durchgangsöffnung 51 vorgesehen, die das Mischmodul 10 mit der ersten Kammer 2 verbindet.

Das Mischmodul 10 ist an sich bekannt, es wird insoweit, auf DE 603 01 278 T2 verwiesen. Es umfasst zwei verschließbare, Sammelbehälter 20 und 21, wobei in jeder der beiden Sammelbehälter 20 bzw. 21 eine Rührschaufel vorgesehen ist. Die Rührschaufeln werden durch einen pneumatischen Antrieb 26 angetrieben. Mittels eines Trichters 28, der auf den Sammelbehältern 20 und 21 angebracht werden, kann, wird die erforderliche Menge der Kunststoffkomponenten in die Sammelbehälter 20, 21 gefüllt. Danach werden die Sammelbehälter 20, 21 mittels eines Deckels 29 verschlossen. So wird beispielsweise zur Herstellung von Formkörpern aus Polyamid im ersten Sammelbehälter 20 ein Komponentenpaar, z. B. Caprolactam und ein Aktivator sowie im zweiten Sammelbehälter 21 ein anderes Komponentenpaar, z. B. Caprolactam und ein Katalysator im vorbestimmten Verhältnis gemischt und temperiert. Die in den Sammelbehöltern 20 und 21 so gebildeten Komponenten gehen noch keine Reaktionen miteinander ein, sondern erst wenn diese miteinander gemischt werden.

Die beiden Sammelbehälter 20, 21 sind über Leitungen miteinander verbunden, wobei an den unteren Auslässen der Sammelbehälter 20, 21 Ventile vorgesehen sind, um das Ausströmen der Kunststoffkomponenten zu steuern. Die Leitungen führen zu Zylindern, in denen zwei Kolben verschieblich angeordnet sind, mit denen die beiden durch die Leitungen geführten Kunststoffkomponenten im vorbestimmten Verhältnis dosiert werden.

Über weitere Leitungen wird das Gemisch zu der Durchgangsöffnung 51 und von dort in einen statischen Mischer 55 geführt, in dem die Komponenten zu einer Zwischenkomponente gemischt und darüber in die erste Kammer 2 geleitet werden. Hierzu weist der rohrförmige untere Teil des statischen Mischers 55 eine Vielzahl von abgewinkelten, einander übergreifenden Ablenkflächen auf, die von der Rohrinnenwand in den Rohrraum nach unten orientiert und jeweils versetzt an der Rohrinnenwand angeordnet sind. Die Ablenkflächen überlappen sich und bilden Zwischenräume, in denen die im Mischmodul 10 in den Sammelbehältern 20 und 21 gemischten und nachfolgend im vorbestimmten Verhältnis dosierten Komponenten zu einer reagierenden Zwischenkomponente gemischt werden.

in der ersten Kammer 2 ist eine Mischeinrichtung 12 angeordnet, wobei die Zwischenkomponente durch die Durchlassöffnung 51 in der statischen Mischer 55 und dann in die Mischeinrichtung 12 geleitet wird. Die Mischeinrichtung 12 umfasst ein zylindrisches Behältnis 30 das mittels eines Schwenkantriebs 13 aus der in der Figur dargestellte oben offenen Stellung in eine um etwa 90 Grad geschwenkte Ausgießstellung verfahrbar ist. In das Behältnis 30 ist von oben ein Rührwerk absenkbar, dessen Rührer 31 von einem Antriebsmotor 32 rotiert wird. Das Rührwerk ist entweder vertikal verfahrbar oder zusammen mit dem Behältnis verschwenkbar angeordnet, sodass es den Ausgießvorgang nicht behindert,

Zwischen der ersten Kammer 2 und der darunter liegenden zweiten Kammer 3 ist eine weitere abschließbare Durchgangsöffnung vorgesehen, in der ein Trichter 61 angeordnet ist, um die aus dem Behältnis 30 nach Verschwenken mittels des Schwenkantriebs 13 ausfließende mit Füllstoffen angereicherte Zwischenkomponente aufzunehmen.

Der Betrieb der Vorrichtung zur Herstellung von Formkörpern aus Kunststoff ist folgendermaßen:

Zunächst werden die einzelnen Kunststoffkomponenten, z. B. Caprolactam, Aktivator und Katalysator im vorbestimmen Verhältnis ih die beiden Sammelbehälter 20 und 21 des Mischmoduls 10 gefüllt und dort intensiv gemischt und ggf. temperiert. Diese so gemischten und dosierten Kunststoffkomponenten gelangen dann durch die Durchgangsöffnung 51 in den statischen Mischer 55, in dem sie intensiv vermischt werden, so dass eine reagierende Zwischenkomponente entsteht, die in die erste Kammer 2 und dort in die Mischeinrichtung 12 gelangt. Die Zwischenkomponente fließt in das Behältnis 30, in dem zuvor eine gewünschte Menge Füllstoff eingebracht worden ist. Die Kammer 2 ist dabei evakuiert oder wird evakuiert. Die Mischeinrichtung 12 ist temperiert um auf diese Weise eine Entgasung und Entfeuchtung der aus dem Mischmodul 10 kommenden Zwischerikomponente zu bewirken. Gleichzeitig wird die Zwischenkomponente mit dem Fülltoff entsprechend den Verarbeitungsvorschriften temperiert. Mittels des Rührwerks 31/32 erfolgt dabei gleichzeitig eine intensive Durchmischung der Zwischenkomponente mit dem Füllstoff.

Es versteht sich, dass das Vakuum auch vor dem Einfüllen des Füllstoffs und vor dem Einfüllen des Kunststoffgemisches in die Mischeinrichtung 12 aufgebaut werden kann, sodass das Vakuum in der ersten Kammer 2 die Zuleitung des Kunststoffgemisches aus dem Mischmodul 10 in die Mischeinrichtung 12 aufgrund des Druckunterschieds zwischen dem Mischmodul 10, in dem zum Beispiel normaler Luftdruck herrscht, und der ersten Kammer 2, unterstützt.

Mittels der Mischeinrichtung 12 wird das aus den Kunststoffkomponenten bestehende Kunststoffgemisch mit dem Füllstoff vermengt. Gleichzeitig wird aufgrund des Vakuums in der ersten Kammer 2 das Kunststoffgemisch entgast und dessen Restfeuchte entfernt.

Mittels der Vakuumpumpe 9 ist ein Vakuum in der zweiten Kammer 3 aufgebaut, wobei das Vakuum in der zweiten Kammer 3 auch gleichzeitig mit oder nach dem Vakuum in der ersten Kammer 2 erzeugt werden kann. In der zweiten Kammer 3 ist zum Beispiel ein Druck von0,1 bar vorgesehen.

Das mit dem Füllstoff vermengte Kunststoffgemisch gelangt aufgrund der eigenen Schwerkraft und des Druckunterschieds zwischen der ersten Kammer 2 und der zweiten Kammer 3 den Trichter 61 und darüber in die Gussform 60 in der zweiten Kammer 3.

Es versteht sich, dass auch vorgesehen sein kann, dass das Vakuum in der ersten Kammer 2 vermindert wird, sodass ein genügend großer Druckunterschied zwischen der ersten Kammer 2 und der zweiten Kammer 3 gegeben ist, sodass das Gemisch von der ersten Kammer 2 in die zweite Kammer 3 gelangt. So kann insbesondere vorgesehen sein, dass mittels einer Vakuumpumpe 9 gleichzeitig ein Vakuum in der ersten und in der zweiten Kammer erzeugt wird. Nach dem Vermischen des Kunststoffgemisches mit dem Füllstoff wird das Vakuum in der ersten Kammer 2 reduziert, zum Beispiel durch ein Ausgleichsventil mit dem Außenraum, Dadurch ist der Unterdruck in der zweiten Kammer 3 größer als der in der ersten Kammer 2 und das Gemisch gelangt in die zweite Kammer 3.

Durch den Trichter gelangt das mit Füllstoff versetzte Kunststoffgemisch von der ersten Kammer 2 in die Gussform 60 der zweiten Kammer 3 und wird dort zu einem Formkörper geformt und ausgehärtet.

Es kann, insbesondere bei der Verarbeitung größerer Mengen zweckmäßig sein, mittels des Mischmoduls 10 und der darin befindlichen Dosiereinrichtung nur eine der Komponenten aus dem Sammelbehältern 20 und 21 zu dosieren und dann anstelle des statischen Mischers 55 über ein Fallrohr in das Behältnis 30 einzubringen, in welchem die Füllstoffe in vorbestimmter Menge befindlich sind. Die weitere Komponente kann zuvor gemischt und dosiert und in einem Behältnis 33 vorgesehen sein, das ebenfalls innerhalb der Kammer 2 vorgesehen ist und mittels eines Schwenkanfriebs 13 in das Behältnis 30 entleerbar ist. Auf diese Weise können die Komponenten im noch nicht reagierenden Zustand vorgemischt, temperiert und entgast werden, wobei zweckmäßigerweise die höher viskose Komponente mit dem Füllstoff zunächst im Behältnis 30 vermischt wird, wonach die weniger viskose Komponente aus dem Behältnis 33 hinzugefügt wird, bevor der Abguss des Gemisches in den Trichter 61 erfolgt.

Die vorstehend beschriebene Vorrichtung kann nach Entfernen der Mischeinrichtung 12, Verschließen der Durchgangsöffnung 50 und Einbau des Mischmoduls 10 in die Kammer 2 auch als Maschine eingesetzt werden, wie sie in DE 603 01 278 T2 anhand von Figur 1 beschrieben ist.

### Bezugszeichenllste

- 1: - Vorrichtung zur Herstellung von Formkörpern aus Kunststoff
- 2: - erste Kammer
- 3: - zweite Kammer
- 4: - dritte Kammer
- 5: - vierte Kammer
- 6: - Türen
- 7: - Not-Ausschalter
- 8: - Tastschirm-Bedienfeld
- 9: - Vakuumpumpe
- 10: - Mischmodul
- 11: - Plotte
- 12: - Mischeinrichtung
- 13: - Schwenkantrieb
- 20: - Sammelbehälter
- 21: - Sammelbehälter
- 26: - Pneumatischer Antrieb
- 28: - Trichter
- 29: - Deckel
- 30: - Behältnis
- 31: - Rührer
- 32: - Antriebsmotor
- 33: - Behältnis
- 51: - absperrbare Durchlassöffnung
- 55: - statischer Mischer
- 60: - Gussform
- 61: - Trichter
- 100: - Ventil
- 101: - Motorantrieb

## Patentansprüche

1. Vorrichtung zum Herstellen von Formkörpern aus Kunststoff, insbesondere aus Polyamid, mit einem Mischmodul (10) zum Mischen und Dosieren von wenigstens zwei Kunststoffkomponenten. mit einer ersten Kammer (2) und mit mindestens einer mit der ersten Kammer (2) gekoppelten zweiten Kammer (3), die zur Aufnahme einer Gussform (60) vorgesehen ist, und mit Mitteln (9) zum Evakuieren der ersten und/oder der zweiten Kammer (2,3), **dadurch gekennzeichnet, dass** das Mischmodul (10) der ersten Kammer (2) vorschaltbar ist.

2. Vorrichtung nach Anspruch 1, **dadurch gekennzeichnet, dass** das Mischmodul (10) oberhalb der ersten Kammer (2), vorzugsweise über diese angeordnet und der Ausgang des Mischmoduls (10) mit der ersten Kammer (2) verbunden ist.

3. Vorrichtung nach Anspruch 1 oder 2, **dadurch gekennzeichnet, dass** die erste Kammer (2) oberhalb der zweiten kammer (3) vorzugsweise über dieser angeordnet ist.

4. Vorrichtung nach einem der Ansprüche 1 bis 3, **dadurch gekennzeichnet, dass** mindestens eine Vakuumpumpe (9) vorgesehen ist, die mit der ersten und/oder der zweiten Kammer (2, 3) leitungsverbindbar ist.

5. Vorrichtung nach einem der Ansprüche 1 bis 4, **dadurch gekennzeichnet, dass** das Mischmodul (10) wahlweise über oder in der ersten Kammer (2) angeordnet werden kann.

6. Vorrichtung nach einem der Ansprüche 1 bis 5, **dadurch gekennzeichnet, dass** in der ersten Kammer (2) eine Mischeinrichtung (12) vorgesehen ist.

7. Vorrichtung nach Anspruch 6, **dadurch gekennzeichnet, dass** die Mischeinrichtung (12) mindestens ein Behältnis (30) zur Aufnahme eines Füllstoffs (14) und der aus dem Mischmodul (10) austretenden Komponenten aufweist.

8. Vorrichtung nach Anspruch 7, **dadurch gekennzeichnet, dass** Mittel (13) zum Handhaben des Behältnisses (30) in der ersten Kammer (2) vorgesehen sind.

9. Vorrichtung nach einem der Ansprüchel bis 8, **dadurch gekennzeichnet, dass** in der ersten Kammer (2) Mittel zum Temperieren, insbesondere des Behältnisses (30) vorgesehen sind.

10. Vorrichtung nach einem der Ansprüche 1 bis 9, **dadurch gekennzeichnet, dass** die Mischeinrichtung (12) ein Rührwerk (31, 32) aufweist, insbesondere einen in das Behältnis einführbaren Rührer (31).

11. Vorrichtung nach einem der vorhergehenden Ansprüche, **dadurch gekennzeichnet, dass** Mittel zum Temperieren der zweiten Kammer (3), insbesondere der darin befindlichen Gußform (60) vorgesehen sind.

12. Vorrichtung nach einem der vorhergehenden Ansprüche, **dadurch gekennzeichnet, dass** zwischen der ersten und der zweiten Kammer (2, 3) eine absperrbare Durchgangsöfffnung vorgesehen ist.

13. Vorrichtung noch einem der vorhergehenden Ansprüche, **dadurch gekennzeichnet, dass** zwischen dem Mischmodul (10) und der ersten Kammer (2) eine absperrbare Durchgangsöffnung (51) angeordnet ist.

14. Vorrichtung nach Anspruch 13, **dadurch gekennzeichnet, dass** die absperrbare Durchgangsöffnung (51) zwischen Mischmodul (10) und der ersten Kammer (2) in der Decke der, ersten Kammer (2) vorgesehen ist.

15. Vorrichtung nach einem der vorhergehenden Ansprüche, **dadurch gekennzeichnet, dass** zwischen Mischmodul (10) und erster Kammer (2) ein statischer Mischer (55) oder ein fallrohr angeordnet ist.

16. Vorrichtung nach einem der Ansprüche 1 bis 15, **dadurch gekennzeichnet, dass** die erste Kammer (2) mit der zweiten Kammer (3) über ein Fallrohr oder einen Trichter (61) leitungsverbunden ist, der so ausgebildet und angeordnet ist, dass sein Ausgang in der Gussform (60) mündet.
